Europäisches Patentamt

European Patent Office

Office européen des brevets

(11) Publication number: **0 410 676 A1**

# EUROPEAN PATENT APPLICATION

(21) Application number: 90308057.0

(22) Date of filing: 24.07.90

(51) Int. Cl.5: **B60G 21/05**, B60G 11/00

(30) Priority: 25.07.89 US 384758

(43) Date of publication of application:
**30.01.91 Bulletin 91/05**

(84) Designated Contracting States:
**AT BE DE ES FR GB IT NL SE**

(71) Applicant: Kopieczek, Anthony Mark Josef
400 Marguerite Boulevard
Lafayette, Louisiana 70503(US)

(72) Inventor: Kopieczek, Anthony Mark Josef
400 Marguerite Boulevard
Lafayette, Louisiana 70503(US)

(74) Representative: Jennings, Nigel Robin et al
KILBURN & STRODE 30 John Streeteet
London WC1N 2DD(GB)

(54) Vehicle suspension systems.

(57) A suspension system includes a chassis (2), first and second wheel supports (4) on opposite sides of the chassis, a first torsion bar (18) of generally U-shape which extends across the chassis and whose limbs (20) are connected to a respective wheel support (4) and a second torsion bar which extends across the chassis and whose ends are connected to a respective wheel support (4). The second torsion bar is so constructed that a torque applied to one end produces a torque in the opposite sense at the other end. The second torsion bar is divided into two portions, each of which has an outer limb (26) and an inner limb (28) which extend generally parallel to the length of the chassis and which are connected by a central limb (24). The two inner limbs (28) are connected by respective first pivotal connections (32) to a rigid bar (30) which extends between the inner limbs. The rigid bar (30) is connected by a second pivotal connection (36) to a rigid coupling (34) which is connected by a third pivotal connection (38) to the chassis (2).

Fig.1.

# VEHICLE SUSPENSION SYSTEMS

The invention relates to vehicle suspension systems and is concerned with that type of system which comprises a chassis, first and second wheel supports on opposite sides of the chassis for supporting respective wheels for vertical motion with respect to the chassis, a first torsion bar of generally U-shape which extends across the chassis and whose limbs are connected to a respective one of the wheel supports and a second torsion bar which extends across the chassis and whose ends are connected to a respective one of the wheel supports, the second torsion bar being so constructed and arranged that a torque applied to one end produces a torque in the opposite sense at the other end.

It is known to construct an automotive suspension system such that it applies a resistive force to counteract the tendency of the vehicle body to roll, i.e. rotate about its longitudinal axis, when the vehicle deviates from a straight path. It is also known to apply such a resistive force through a medium which links the opposite wheels of one axle. For example, in a known roll or sway bar system, the resistive force is created by the use of a U-shaped bar whose limbs are connected to respective wheels and whose central portion is secured to the frame of the vehicle. Roll of the vehicle about its roll axis twists the roll bar and the reactive torque which is produced resists the roll. While a roll bar is used primarily to resist roll of the vehicle, it can also be used to help to locate the suspension components, as an auxiliary function. It is recognised in the field of suspension design that compromises have to be made regarding the stiffness of the U-shaped bar because a bar that is stiff enough to resist roll during hard cornering also results in the inside wheel becoming unloaded and sacrifices suspension independence.

It is also known to provide a bar in the shape of a "Z" for controlling the motion of the wheels of a vehicle. In this arrangement, such as that shown in US Patent No.3315952 (Vittone), the forwardly directed end of one limb of a "Z" bar is attached to one wheel, the rearward-directed end of the other limb is attached to the opposed wheel, and the central section is attached to the frame of the vehicle. In this arrangement, an upward force on the bar applied by one of the wheels causes a twisting of the central section of the bar which causes a downward force on the opposite wheel. Thus, a bar of this shape tends to keep the inside wheel on the ground as the vehicle body rolls when moving in a curve without providing resistance to roll motions as in the U-shaped bar described above.

The U-shaped roll bar and the Z-shaped bar thus operate in opposite senses and US-A-2565756 discloses a vehicle suspension system in which both types of bar are used. The suspension disclosed in this specification includes a U-shaped bar, the ends of whose limbs are connected to respective wheel supports on opposite sides of the vehicle and a separate Z-shaped bar whose limbs are also connected by complex pivotal mechanisms to the wheel supports. The use of the complex pivotal mechanisms renders the suspension disclosed in the specification bulky, heavy and expensive. Furthermore, the use of a single Z bar means that its limbs which are connected to respective wheel supports inherently extend in opposite directions and this asymmetry leads to considerable complexity in the manufacture and assembly of the suspension system.

It is an object of the present invention to propose a vehicle suspension system of the type referred to above in which the disadvantages of the prior specification referred to are eliminated and the effects of the U and Z bars are combined in a manner which is both simple and cheap and occupies a minimum amount of space. It is a further object of the invention to provide such a system which enables the expense associated with the springs and/or dampers, one of which is usually associated with each wheel, to be substantially reduced.

According to the present invention a vehicle suspension system of the type referred to above is characterised in that the second torsion bar, that is to say the bar which fulfils the function of the Z bar, is divided into two portions, each of which has an outer limb and an inner limb which extend generally parallel to the length of the chassis and which are connected by a central limb which extends transversely of the length of the chassis, that the two inner limbs are connected by respective first pivotal connections to a rigid bar which extends between the inner limbs and that the rigid bar is connected by a second pivotal connection to a rigid coupling which is also connected by a third pivotal connection to the chassis.

The provision of a torque-reversing mechanism constituted by the two inner limbs, the rigid bar, the rigid coupling and the pivotal connections means that it is no longer necessary for the two limbs of the Z bar which are connected to the wheel supports to extend in opposite directions. These therefore preferably extend in the same direction and may thus be simply accommodated within the vehicle and simply connected to the wheel supports without any asymmetry in the vehicle construction. Furthermore, the torque-reversing mechanism of the suspension system of the present invention is particularly cheap, simple, light and effective and not prone to failure.

The inner limb and the outer limb of each portion of the second torsion bar, that is to say the Z bar, may extend in the same direction and in this event each portion will effectively constitute a U bar. It is however preferred that they extend in opposite directions and that each portion thus effectively constitutes a Z bar.

In the simplest embodiment the rigid coupling which extends between the chassis and rigid bar connecting the two inner arms of the second torsion bar is a simple rigid bar. In this context, the word "rigid" is intended to mean only that substantially no bending or buckling of the coupling is possible. It is however possible for the rigid coupling to comprise a spring with or without a damper and this means that the spring and optionally also the damper usually associated with each wheel support may be eliminated. In the most preferred embodiment in which the rigid coupling is a combined damper/spring unit, the damper/spring unit normally associated with each wheel may be omitted and the cost of providing such units is thereby halved. This construction also permits the spring rate of the suspension system to be altered in a very simple manner, that is to say by varying the effective length of the inner limbs of the portions of the second torsion bar with respect to the length of the outer limbs. The construction of the present invention also permits all the springs to be omitted entirely in that if the torsion bars are appropriately dimensioned and constructed they may take over the entire spring function.

Further features and details of the invention will be apparent from the following description of two specific embodiments which is given by way of example with reference to the accompanying diagrammatic drawings, in which:

Figure 1 is a perspective view of a first embodiment of a compound portion suspension system for use in a racing car in accordance with the invention;

Figure 2 is a scrap schematic view of the torque-reversing mechanism used in the system shown in Figure 1, shown in the loaded state; and

Figure 3 is a view similar to Figure 1 of a second embodiment.

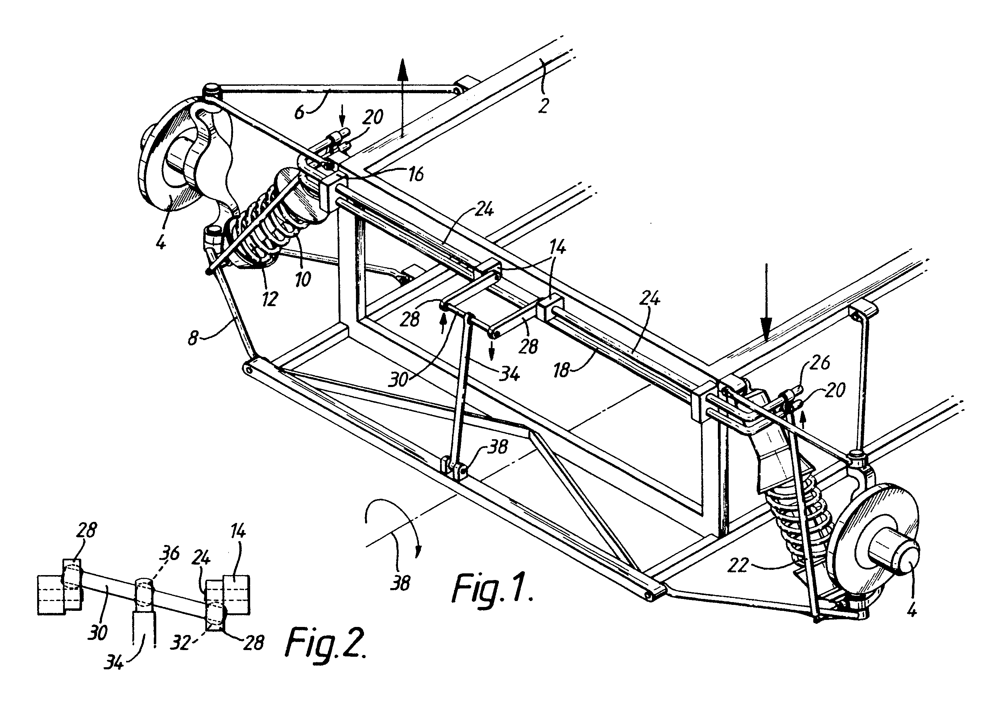

Figure 1 shows part of a vehicle chassis or frame 2 to which two wheel supports 4 are connected by any conventional means, in this case an upper V-shaped suspension arm 6 and a similar lower suspension arm 8 which permit relative vertical movement of the chassis and wheel supports. Each wheel support 4 is also connected to one end of a unit comprising a coil spring 10 and damper 12 whose other end is connected to the chassis.

Extending across the vehicle chassis and connected to it by pillow blocks 14 and 16, which permit relative rotation, is a torsion bar 18 of generally U-shape whose limbs 20 extend generally parallel to the length of the chassis, that is to say the direction of movement of the vehicle, and are connected by respective links or bars 22 to a respective wheel support 4.

Also extending across the vehicle chassis adjacent to the U-shaped bar, in this case immediately above it, is a second torsion bar which is referred to as a Z bar in that torque applied to one end of it in one sense results in a torque at the other end in the opposite sense. However, this Z bar is not in fact Z-shaped but comprises two portions, each of which is of Z-shape and extends approximately half way across the width of the chassis. Each portion comprises a central limb 24 which extends transverse to the length of the chassis and rotatably secured to it by the pillow blocks 14,16. At the ends of the central limb 24 there are an outer limb 26 and an inner limb 28, respectively, which extend in opposite directions generally parallel to the length of the chassis. The outer limbs 26 are connected to a respective vehicle support by the associated link 22. The two inner limbs 28 extend parallel to one another and are connected together at their free ends by a rigid rod 30. The connection of the rod 30 to the limbs 28 is by means of socalled rod ends comprising a part-spherical apertured ball 32 carried on the rod 30 and received in a corresponding aperture in the associated limb 28 whereby relative pivotal movement is permitted. The rod 30 is connected at its midpoint to a rigid coupling 34, constituted in this case by a simple bar, by means of a further partspherical ball 36 on the rod 30 which is received in a corresponding aperture in the upper end of the bar 34. The lower end of the bar 34 is connected by a simple pivotal connection 38 to the chassis 2. It will be appreciated that the limbs 28, rods 30 and 34 and pivotal connections 32 and 36 together constitute a torque-reversing mechanism in that if the outer limb 26 of one portion of the Z bar moves, say, upwardly, then the correspondinginner limb 28 moves downwardly and moves the associated end of the rod 30 with it. Due to the fact that the midpoint of the rod 30 is fixed in position in the vertical direction this results in the other end of the rod 30 and thus the associated limb 28 moving upwardly (as is shown in Figure 2) and thus the outer limb 26 of the other portion of the Z bar moving downwardly.

In use, if one of the wheel supports 4 should move vertically with respect to the chassis 2, for instance under the influence of cornering or upon impact with an obstruction, this causes a torque to be applied to the two torsion bars via the link 22 and their associated outer limbs 20 and 26. The U-shaped torsion bar 18,20 acts such that an input torque in one direction results in an output torque at the other end in the same direction. However, the Z bar 24,26 provides an output torque opposite to that of the input torque due to the torque-reversing mechanism described above. If the U and Z bars have equal characteristics, the output torque provided by the one bar with cancel the output torque provided by the other. The resulting output torque can, however, be adjusted to provide an output torque which varies as a function of the input torque by providing bars with different characteristics.

The U bar 18,20 provides roll stiffness and thus counteracts the tendency of the vehicle body to roll about the vehicle roll axis 38, e.g. when cornering, but tends to lift the inside wheel from the ground as the vehicle moves in a curved path. The Z bar 24,26 does not contribute to roll stiffness but does provide a force which tends to keep the inside wheel in contact with the ground as the vehicle moves in a curved path. Thus if the characteristics of the Z bar are such that its output torque is larger than that provided by the U bar, the U bar can be designed to provide a significant amount of roll stiffness while the torque provided by the Z bar will maintain contact between the ground and the inside wheel. The Z bar thus corrects for a significant defficiency in the action of the U bar and allows greater design flexibility in the roll stiffness of the U bar.

In a modified embodiment which is not illustrated, the portions 18 and 24 of the torsion bars are accommodated wholly within the chassis or frame 2 of the vehicle. This produces a yet further saving of space and a reduction in wind drag. Alternatively or additionally, the outer limbs 20,26 of the torsion bars need not be acted on directly by movement of the wheel support but may be acted on indirectly via a rocker arm actuated by the wheel support by either a push rod or a pull rod. If the rocker arms are adjustable this permits the roll stiffness to be adjusted in a very simple manner. The roll stiffness may be further adjustable by connecting the rigid rod 30 to the inner arms 28 of the portions of the Z bar in such a manner that it may be moved fore and aft. If the U and Z bars are appropriately dimensioned and constructed they may take over the entire spring function of the suspension system and the coil springs 10 may be omitted entirely. In this event, the adjustment of the optional rocker arms referred to above and/or of the points on the arms 28 at which the rod 30 is connected to them will result not only in an adjustment of the roll stiffness but also in adjustment of the spring rate of the entire suspension system.

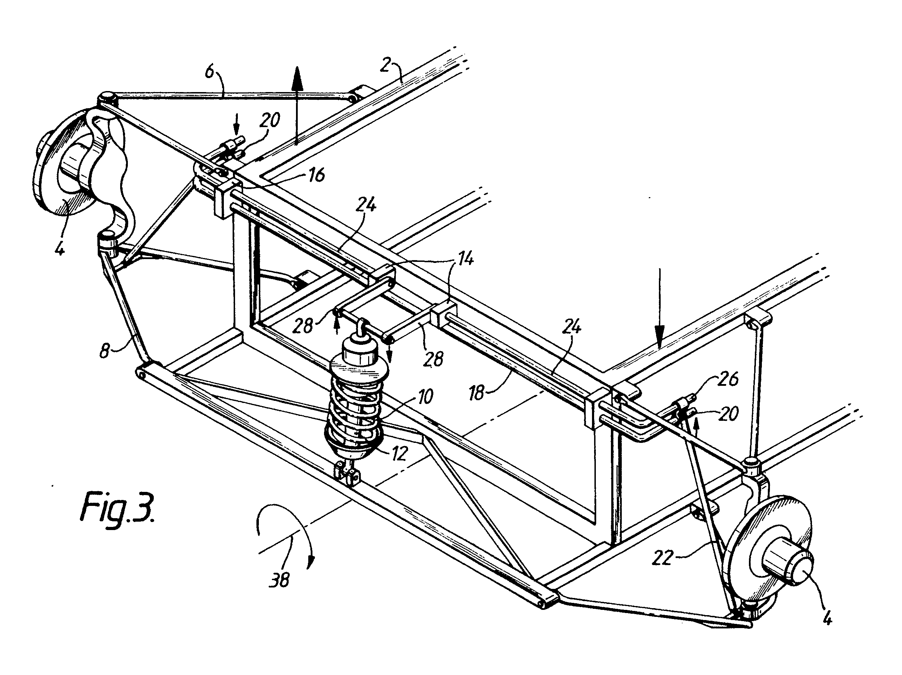

The modified embodiment illustrated in Figure 3 is very similar to that illustrated in Figure 1 and the same reference numerals are used to designate similar components. However, the two outboard coil springs 10 and dampers 12 have been omitted and a single coil spring 10 and damper 12 have been used to replace the rigid rod 34. This construction operates in a very similar manner to that illustrated in Figure 1 but has the substantial advantage that the space, weight and expense of one of the two spring and damper units is saved entirely. The single centrally mounted spring and damper unit performs precisely the same function as the two units which were previously used and it will be appreciated that if the points of connection of the rod 30 to the arms 28 are movable the roll stiffness and suspension spring rate of the vehicle may be readily adjusted using precisely the same spring 10.

**Claims**

1. A vehicle suspension system comprising a chassis, first and second wheel supports on opposite sides of the chassis for supporting respective wheels for vertical motion with respect to the chassis, a first torsion bar of generally U-shape which extends across the chassis and whose limbs are connected to a respective one of the wheel supports and a second torsion bar which extends across the chassis and whose ends are connected to a respective one of the wheel supports, the second torsion bar being so constructed and arranged that torque applied to one end produces a torque in the opposite sense at the other end, characterised in that the second torsion bar is divided into two portions (24,26,28), each of which has an outer limb (26) and an inner limb (28) which extend generally parallel to the length of the chassis and which are connected by a central limb (24) which extends tranversely of the length of the chassis, that the two inner limbs (28) are connected by respective first pivotal connections (32) to a rigid bar (30) which extends between the inner limbs (28) and that the rigid bar (30) is connected by a second pivotal connection (36) to a rigid coupling (34) which is also connected by a third pivotal connection (38) to the chassis (2).

2. A system as claimed in claim 1, characterised in that the inner limb (28) and the outer limb (26) of each portion of the second torsion bar extend in opposite directions.

3. A system as claimed in claim 1 or claim 2, characterised in that the rigid coupling is a rigid bar (34).

4. A system as claimed in claim 1 or claim 2, characterised in that each wheel support (4) does not have a spring associated with it and that the rigid coupling comprises a common spring (10).

5. A system as claimed in claim 4, characterised in that each wheel support (4) does not have a respective damper associated with it and that the rigid coupling comprises a common damper (12).

6. A system as claimed in any one of the preceding claims, characterised in that the first pivotal connections (32) constitute at least part-spherical bodies carried by either the rod (30) or the associated limb (28) and received in a corresponding recess in the other of the rod (30) and the limb (28).

7. A system as claimed in any one of the preceding claims, characterised in that the second pivotal connection comprises an at least part-spherical body (36) carried by one of the rod (30) and the coupling (34) and received in a corresponding aperture in the other of the rod (30) and the coupling (34).

8. A system as claimed in any one of the preceding claims, characterised in that the third pivotal connection (38) only permits relative pivotal movement in a single plane.

Fig.1.

Fig.2.

EP 0 410 676 A1

Fig.3.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
| --- | --- | --- | --- |
| X,A | DE-B-1 236 952  (VOLKSWAGEN) <br> * column 3, lines 10 - 20; figures 1-4 * <br> — — — | 1,2,6 | B 60 G 21/05 <br> B 60 G 11/00 |
| Y | DE-B-1 165 425  (VOLKSWAGEN) <br> * figures 1-3 * <br> — — — | 1,2,6 | |
| Y,D | US-A-2 565 756  (COLEMAN) <br> * figures 1-6 * <br> — — — | 1,2,6 | |
| A | PATENT ABSTRACTS OF JAPAN vol. 12, no. 445 <br> (M-767)(3292) 22 November 1988, <br> & JP-A-63 176713 (TOYOTA) 21 July 1988, <br> * the whole document * <br> — — — | 1,6 | |
| A | DE-B-1 231 578  (TREMEA) <br> * figures 1, 2 * <br> — — — | 4 | |
| A | US-A-1 984 978  (MOFFITT) <br> * figures 1, 2 * <br> — — — | 3 | |
| A | US-A-2 417 206  (LARISON) <br> * figures * <br> — — — | 2 | TECHNICAL FIELDS SEARCHED (Int. Cl.5) |
| A | DE-U-7 632 574  (BOGE) <br> * figure 4 * <br> — — — | 5 | B 60 G |
| A | US-A-3 292 945  (DANGAUTHIER) <br> * figures 1-4 * <br> — — — | 4,5 | |
| A,D | US-A-3 315 952  (VITTONE) <br> — — — — — | | |

The present search report has been drawn up for all claims

| Place of search | Date of completion of search | Examiner |
| --- | --- | --- |
| The Hague | 29 October 90 | TORSIUS A. |